# FASCICULE DE BREVET EUROPEEN

(11) **EP 1 853 444 B1**
(45) Date de publication et mention de la délivrance du brevet: **31.10.2012**
(21) Numéro de dépôt: 06724907.8
(22) Date de dépôt: 01.03.2006
(51) Int. Cl.: B60G 21/05, B60G 7/00

(54) **ESSIEU SOUPLE COMPRENANT UNE TRAVERSE DONT LES EXTREMITES PRESENTENT UNE ZONE DE MOINDRE RIGIDITE, TRAVERSE, PROCEDE DE FABRICATION ET VEHICULE CORRESPONDANT**
FLEXIBLE ACHSE MIT EINEM QUERTRÄGER, DESSEN ENDEN EINEN WENIGER STARREN BEREICH AUFWEISEN, QUERTRÄGER, HERSTELLUNGSVERFAHREN UND ENTSPRECHENDES FAHRZEUG
FLEXIBLE AXLE COMPRISING A CROSS-MEMBER WHEREOF THE ENDS HAVE A LESS RIGID ZONE, CROSS-MEMBER, METHOD FOR MAKING SAME AND CORRESPONDING VEHICLE

(30) Priorité: 02.03.2005 FR 0502131
(43) Date de publication de la demande: 14.11.2007
(73) Titulaire: Auto Chassis International SNC, 72086 Le Mans Cédex 9 (FR); Toyota Jidosha Kabushiki Kaisha, Toyota-shi, Aichi-ken, 471-8571 (JP); PEUGEOT CITROËN AUTOMOBILES S.A., 78140 Vélizy Villacoublay (FR)
(72) Inventeur: FERET, Olivier, F-72400 Cherreau (FR)
(74) Mandataire: Larcher, Dominique
(86) Numéro de dépôt international: PCT/EP2006/060372
(87) Numéro de publication internationale: WO 2006/092419

(56) Documents cités:
- FR-A- 2 793 735
- FR-A- 2 802 468
- US-A- 6 047 978
- PATENT ABSTRACTS OF JAPAN vol. 1998, no. 14, 31 décembre 1998 (1998-12-31) -& JP 10 230723 A (TOYOTA MOTOR CORP), 2 septembre 1998 (1998-09-02)

## Description

Le domaine de l'invention est celui des véhicules automobiles. Plus précisément, l'invention concerne les essieux souples pour les véhicules automobiles. Un tel essieu selon le préambule de la revendication 1 est connu du document US 6 047 978 A, qui forme l'état de la technique pertiniant.

On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Au cours de la conception d'un essieu, deux grandeurs sont, entre autres, considérées pour apprécier la qualité de l'essieu : la flexion et la torsion.

Le principe des essieux souples permet de concilier une forte raideur en flexion et une relative souplesse en torsion. En général, c'est par la géométrie de la section de la traverse, via ses inerties de flexion et de torsion, qu'est obtenu le compromis souhaité entre raideur en flexion et souplesse (relative) de torsion.

Les sections choisies pour réaliser des traverses en acier (ou autre matériau isotrope) ont souvent des formes de « V », de « U », de « L », car ces types de géométrie présentent un rapport intéressant entre inertie de flexion et inertie de torsion.

Les dernières années ont vu un déploiement important de la technique des essieux souples sur les segments de gamme inférieure et moyenne de la construction automobile, grâce à de nombreux avantages, parmi lesquels un excellent compromis prestations/architecture, et une mise en oeuvre économique utilisant principalement des assemblages de type mécano soudé.

Ces avantages conduisent les concepteurs de liaison au sol à continuellement pousser la technique dans ses derniers retranchements. Les essieux souples sont en effet entachés d'un certain nombre de limitations parmi lesquelles un compromis délicat entre raideurs longitudinale et transversale et une durabilité conditionnée par la tenue en endurance de chacun de leurs composants, soumis à d'importantes déformations élastiques.

L'élément de liaison, ou traverse, fait partie des composants les plus délicats à mettre au point, notamment sur le plan de l'endurance. Outre la tenue du corps de traverse, les zones d'accostage sur les bras, généralement soudées, sont particulièrement sollicitées et requièrent toute l'attention des développeurs sous peine de rupture prématurée de la liaison.

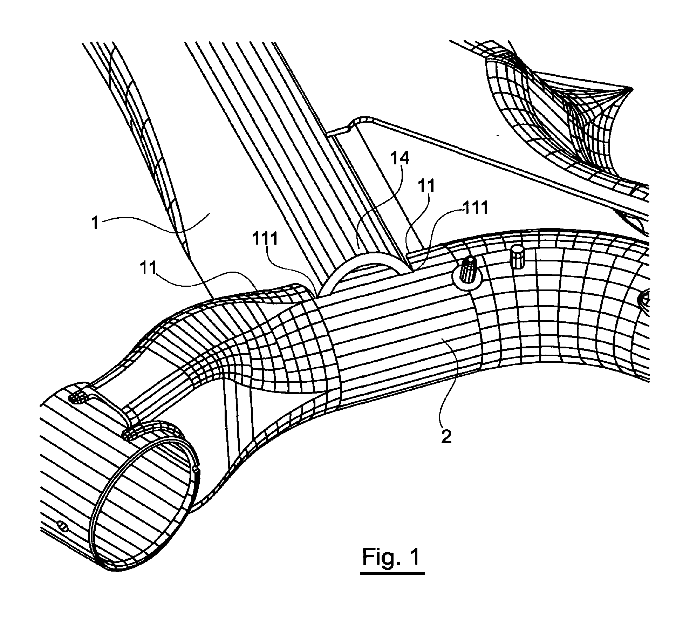

Une solution classique de solidarisation d'une traverse à un bras longitudinal est illustrée par la figure 1. Tel que cela apparaît, la traverse 1 est disposée sensiblement perpendiculairement au bras longitudinal 2, l'extrémité de la traverse 1 étant prévue pour venir épouser le bras 2. Des cordons de soudure (non représentés) sont déposés à l'interface entre la traverse et le bras.

Pour ce faire, la traverse présente latéralement deux portions d'accostage 11 dont la forme correspond à celle (en général cylindrique) du bras. Ces portions d'accostage 11 se prolongent classiquement de façon que la traverse viennent couvrir le dessus des bras 2.

La figure 1 fait clairement apparaître qu'une portion de liaison 14 relie les deux portions d'accostage de la traverse, en formant avec chacune de celles-ci un angle 111.

Avec ce type de solution, on constate régulièrement que les soudures sont fortement sollicitées en fin de cordon, et plus précisément au niveau des angles 111 de la traverse 1. Ceci peut se traduire par l'apparition de fissures sur la soudure, ces fissures coupant à terme le cordon de soudure en deux. Dans certains cas, ces fissures vont jusqu'à se répandre dans le bras d'essieu.

On comprend bien évidemment que de tels phénomènes peuvent entraîner des détériorations importantes de l'essieu, ceci pouvant avoir des répercussions sur le niveau de sécurité offert par le véhicule équipé de l'essieu en question.

En tout état de cause, il est souhaitable de supprimer, ou à tout le moins de limiter les phénomènes mentionnés précédemment.

Or, l'analyse de ces phénomènes conduit tout d'abord à constater que les cordons de soudure à l'interface traverse/bras travaillent en "pelage", ce type de sollicitation correspondant à une faiblesse connue des cordons, qui tient notamment à l'orientation de leur structure métallographique en cours de refroidissement.

Parallèlement, quand des sollicitations importantes s'exercent sur les zones d'accostage, notamment du fait des flexions successives de la traverse, les angles 111 tendent à poinçonner la paroi du bras longitudinal. En d'autres termes, ces angles 111 sous l'effet des vibrations et secousses transmises par le véhicule, connaissent des micro-déplacements dirigés vers l'intérieur du bras et se traduisant par des attaques (à la façon d'un poinçon) de la paroi du bras.

Ces attaques répétées engendrent à terme une fissuration de la paroi du bras et/ou un pelage du cordon de soudure.

Pour remédier à cette situation, une solution consisterait à déporter les angles saillants qui provoquent le poinçonnage dans une région dans laquelle leur contact avec le bras d'essieu serait évité.

Cette solution oblige toutefois à prolonger la traverse, ce qui se traduit par un alourdissement de la traverse et donc de l'essieu. Ceci va à l'encontre des attentes des constructeurs de véhicules qui recherchent généralement des solutions visant un allègement du véhicule.

De plus, un tel allongement de la traverse aurait également des répercussions au niveau du coût de l'essieu, ce qui n'est évidemment pas souhaité non plus par les constructeurs de véhicules.

Une autre solution consisterait à augmenter l'épaisseur de la paroi des bras longitudinaux, ceci afin d'en augmenter la résistance.

Une fois encore, ceci aurait pour conséquence d'augmenter le poids de l'essieu, ainsi que son coût.

L'invention a notamment pour objectif de pallier les inconvénients de l'art antérieur.

Plus précisément, l'invention a pour objectif de proposer une technique pour assurer de façon plus fiable et plus durable la liaison entre la traverse et les bras longitudinaux d'un essieu souple, comparée aux solutions de l'art antérieur.

En ce sens, l'invention a en particulier pour objectif de fournir un tel essieu qui supprime, ou à tout le moins qui limite les risques de fissuration des bras provoqués par la traverse, ainsi que les phénomènes de pelage des cordons de soudure dans les zones d'accostage de la traverse sur les bras.

Un autre objectif de l'invention est de fournir un tel essieu qui soit simple de conception et qui puisse être assemblé plus aisément et/ou plus rapidement qu'avec les solutions classiques de l'art antérieur.

L'invention a aussi pour objectif de fournir un tel essieu qui soit peu coûteux et facile à mettre en oeuvre.

Ces objectifs, ainsi que d'autres qui apparaîtront par la suite, sont atteints grâce à l'invention qui pour objet un essieu souple de véhicule automobile, comprenant deux bras longitudinaux reliés par une traverse dont chaque extrémité présente au moins deux bords d'accostage épousant transversalement une portion périphérique dudit bras et étant reliés au moins par une portion de liaison, les extrémités de ladite traverse présentant, au voisinage de ladite portion de liaison, au moins trois zones possédant des rigidités différentes au moins en flexion, dont au moins une zone intermédiaire s'étendant à partir de ladite extrémité de ladite traverse et présentant une première rigidité en flexion et au moins deux zones extrêmes s'étendant entre ladite zone intermédiaire et lesdits bords d'accostage, lesdites zones extrêmes présentant chacune une deuxième rigidité en flexion supérieure à ladite première rigidité en flexion.

Ainsi, on constate avec des essieux selon l'invention que les contraintes agissant au niveau des cordons de soudure sont notablement réduites lors de sollicitations s'exerçant sur l'essieu.

En effet, lors d'une flexion de la traverse, les surfaces de la traverse liées au bras longitudinal s'opposent aux mouvements que celui-ci leur prescrit, créant ainsi une zone de fortes contraintes à l'interface traverse/bras.

L'invention permet donc de réduire les contraintes à l'interface, ceci en introduisant une souplesse relative à proximité de l'accostage. Il en résulte donc une dissipation partielle des contraintes de flexion entraînant les phénomènes de poinçonnage et de fissuration rencontrés avec l'art antérieur, ce qui se traduit par une meilleure tenue dans le temps des bras longitudinaux et des cordons de soudure.

Des simulations numériques ont montré que les contraintes s'exerçant sur les liaisons traverse/bras d'un essieu selon l'invention diminuent d'environ 10 %, ce qui se traduit par une augmentation de la durée de vie de 50 % par rapport aux solutions classiques.

En outre, un tel résultat est obtenu tout en conservant les prestations élasto-cinématiques de l'essieu.

En effet, l'homme du métier est tenté, pour augmenter la résistance mécanique d'un essieu, de renforcer notamment les liaisons entre les différents composants de l'essieu (par exemple en augmentant la quantité de soudure), ou à renforcer ces composants eux-mêmes (par exemple en augmentant l'épaisseur des parois des bras longitudinaux). Ce type de solution a naturellement tendance à augmenter le poids et le coût de l'essieu.

L'invention s'inscrit donc dans une approche différente de la démarche classique de résolution de problème qui vient d'être mentionnée.

Ainsi, selon la technique proposée, la durée de vie de la liaison traverse/bras est augmentée en introduisant une souplesse relative au niveau de la traverse.

Selon une solution préférée, ladite zone intermédiaire forme une zone déformable.

Une telle zone déformable a pour effet de constituer une sorte de réserve élastique intégrée dans la traverse et ayant la liberté de se déformer lorsque les contraintes à l'interface traverse/bras deviennent trop fortes.

On note que ces zones déformables sont prévues pour agir ou réagir essentiellement à des efforts en flexion, et ne travaillent que très peu en dehors de ces sollicitations.

Les caractéristiques mécano-élastiques de l'essieu sont ainsi conservées, contrairement à ce qu'engendraient des solutions de rigidification qui aggravent les contraintes aux liaisons en perturbant les gradiants de raideur.

Selon un premier mode de réalisation, ladite zone intermédiaire correspond à au moins une réduction de matière dans la paroi de ladite traverse.

Dans ce cas, selon une première variante préférée, ladite zone intermédiaire forme une échancrure s'étendant entre lesdites zones d'extrémité.

Une telle échancrure peut être obtenue de façon aisée et rapide. De plus, son étendue et sa forme peuvent être simulées par le calcul de façon relativement simple, en fonction des caractéristiques recherchées.

Toutefois, d'autres modes de réalisation peuvent être envisagés.

Ainsi, selon une deuxième variante, ladite zone intermédiaire présente une paroi amincie par rapport à la paroi de la traverse qui l'entoure.

Selon une troisième variante, ladite zone intermédiaire comprend des orifices.

Selon un deuxième mode de réalisation, ladite zone intermédiaire forme une excroissance ou une cavité.

La zone intermédiaire ainsi constituée s'aplanit ou se recroqueville légèrement lors d'une flexion de la traverse.

Selon l'un ou l'autre de ces deux modes de réalisation, ladite traverse présente préférentiellement un profil en V, ladite zone intermédiaire étant ménagée de façon sensiblement médiane par rapport à la section en V.

L'invention concerne également une traverse pour essieu souple de véhicule automobile, dont chaque extrémité présente au moins deux bords d'accostage destinés à épouser transversalement une portion périphérique d'un bras longitudinal dudit essieu et étant reliés au moins par une portion de liaison, les extrémités de ladite traverse présentant, au voisinage de ladite portion de liaison, au moins trois zones possédant des rigidités différentes au moins en flexion, dont au moins une zone intermédiaire présentant une première rigidité en flexion et au moins deux zones extrêmes s'étendant entre ladite zone intermédiaire et lesdits bords d'accostage, lesdites zones extrêmes présentant chacune une deuxième rigidité en flexion supérieure à ladite première rigidité en flexion.

L'invention concerne aussi un procédé de fabrication d'une traverse pour essieu souple, du type présentant au moins deux bords d'accostage destinés à épouser transversalement une portion périphérique d'un bras longitudinal dudit essieu et étant reliés au moins par une portion de liaison, comprenant une étape de réalisation, aux extrémités de ladite traverse et au voisinage de ladite portion de liaison, d'au moins trois zones possédant des rigidités différentes au moins en flexion, dont au moins une zone intermédiaire présentant une première rigidité en flexion et au moins deux zones extrêmes s'étendant entre ladite zone intermédiaire et lesdits bords d'accostage, lesdites zones extrêmes présentant chacune une deuxième rigidité en flexion supérieure à ladite première rigidité en flexion.

Avantageusement, ladite zone intermédiaire est réalisée par découpe d'une échancrure.

Selon un mode de réalisation particulier, le procédé comprend une étape d'emboutissage de ladite traverse, ladite découpe d'une échancrure étant réalisée préalablement à ladite étape d'emboutissage.

On comprend que l'on peut donc conserver des techniques de fabrication de traverse traditionnelles, en particulier concernant les traverses à section ouverte réalisées par emboutissage.

Il suffit donc d'insérer une simple étape de fabrication (découpe de l'échancrure) pour modifier de façon notable les caractéristiques de l'essieu souple selon l'invention, avec les résultats indiqués précédemment.

L'invention concerne encore un véhicule équipé d'au moins un essieu souple comprenant deux bras longitudinaux reliés par une traverse dont chaque extrémité présente au moins deux bords d'accostage épousant transversalement une portion périphérique dudit bras et étant reliés au moins par une portion de liaison, les extrémités de ladite traverse présentant, au voisinage de ladite portion de liaison, au moins trois zones possédant des rigidités différentes au moins en flexion, dont au moins une zone intermédiaire présentant une première rigidité en flexion et au moins deux zones extrêmes s'étendant entre ladite zone intermédiaire et lesdits bords d'accostage, lesdites zones extrêmes présentant chacune une deuxième rigidité en flexion supérieure à ladite première rigidité en flexion.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'une liaison entre une traverse et un bras d'essieu selon l'art antérieur ;
- les figures 2 et 3 sont des vues respectivement en perspective et de dessus d'une liaison entre une traverse et un bras d'essieu selon l'invention.

Tel que déjà mentionné précédemment, le principe de l'invention réside dans le fait d'intégrer dans la structure de la traverse, au niveau de ses extrémités, des zones de souplesse relative en flexion.

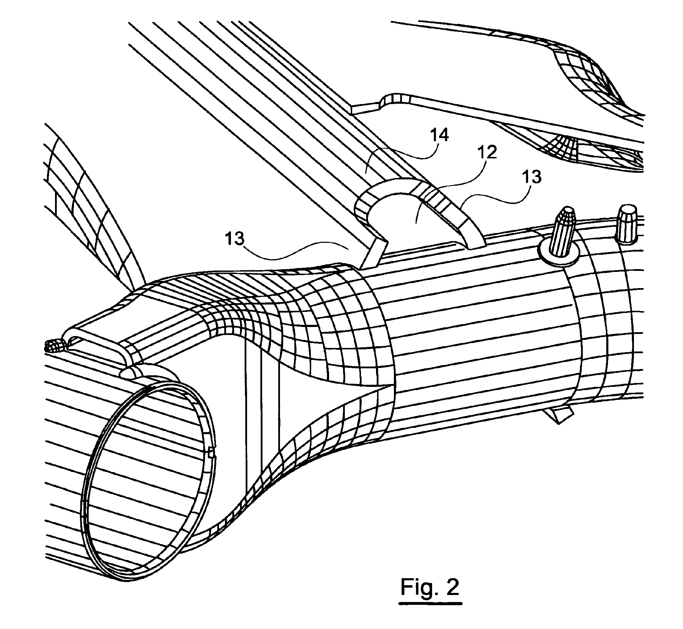

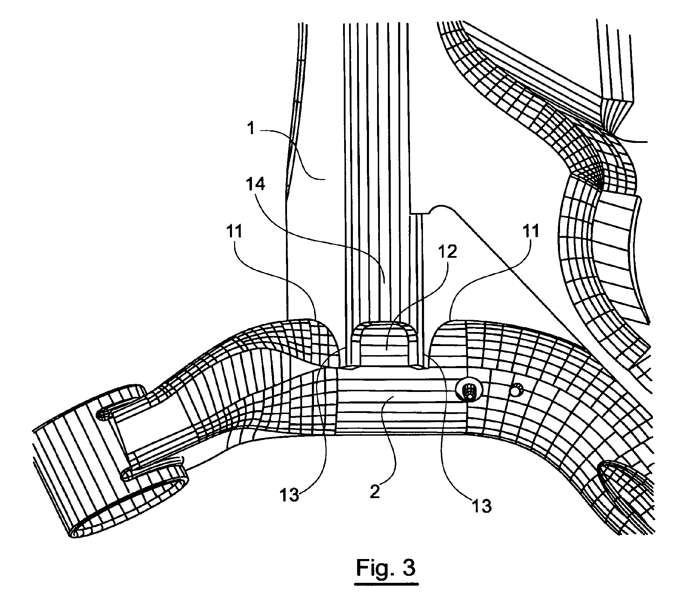

Tel qu'illustré par les figures 2 et 3, l'essieu souple comprend deux bras longitudinaux 2 reliés par une traverse 1 présentant à chacune de ses extrémités, une zone 12 dont la rigidité en flexion est inférieure à celle des zones 13 s'étendant entre la zone 12 et les bords d'accostage 11.

Comme cela apparaît clairement sur ces figures, la zone 12 est, selon le présent mode de réalisation, constituée par une échancrure ménagée au voisinage de la portion de liaison 14 des bords d'accostage 11.

Cette échancrure constitue une zone susceptible de se déformer légèrement, ce qui introduit par conséquent une souplesse relative à l'extrémité de la traverse, lors d'une flexion de celle-ci. On limite ainsi les contraintes s'exerçant au niveau des cordons de soudure réalisés entre la traverse et les bras longitudinaux.

On note que, selon d'autres modes de réalisation envisageables, la zone 12 peut également introduire une souplesse relative en flexion aux extrémités de la traverse en étant constituée par :
- un amincissement local de la paroi de la traverse ;
- une série d'orifices (réalisés par exemple par perçage) délimitant la zone ;
- une cavité ou une excroissance.

Selon le présent mode de réalisation, la traverse présente une section ouverte en V, et l'échancrure correspondant à la zone 12 occupe une position médiane par rapport à la section en V de la traverse.

Dans le cas d'une traverse en V, la portion de liaison 14 des bords d'accostage borde la zone 12 et correspond à la base du V formé par la section de la traverse.

Une telle traverse est réalisée à partir d'une tôle acier d'une épaisseur de 5,5 mm, par une technique d'emboutissage consécutivement à une étape de découpe de l'échancrure correspondant à la zone 12.

## Revendications

1. Essieu souple de véhicule automobile, comprenant deux bras longitudinaux (2) reliés par une traverse (1) dont chaque extrémité présente au moins deux bords d'accostage (11) épousant transversalement une portion périphérique dudit bras (2) et étant reliés au moins par une portion de liaison (14),
**caractérisé en ce que** les extrémités de ladite traverse (1) présentent, au voisinage de ladite portion de liaison (14), au moins trois zones (12), (13) possédant des rigidités différentes au moins en flexion, dont au moins une zone intermédiaire (12) s'étendant à partir de ladite extrémité de ladite traverse et présentant une première rigidité en flexion et au moins deux zones extrêmes (13) s'étendant entre ladite zone intermédiaire (12) et lesdits bords d'accostage (11), lesdites zones extrêmes (13) présentant chacune une deuxième rigidité en flexion supérieure à ladite première rigidité en flexion.

2. Essieu souple selon la revendication 1, **caractérisé en ce que** ladite zone intermédiaire (12) forme une zone déformable.

3. Essieu souple selon l'une des revendications 1 et 2, **caractérisé en ce que** ladite zone intermédiaire (12) correspond à au moins une réduction de matière dans la paroi de ladite traverse.

4. Essieu selon la revendication 3, **caractérisé en ce que** ladite zone intermédiaire (12) forme une échancrure s'étendant entre lesdites zones d'extrémité (13).

5. Essieu souple selon la revendication 3, **caractérisé en ce que** ladite zone intermédiaire (12) présente une paroi amincie par rapport à la paroi de la traverse (1) qui l'entoure.

6. Essieu souple selon la revendication 3, **caractérisé en ce que** ladite zone intermédiaire (12) comprend des orifices.

7. Essieu souple selon la revendication 2, **caractérisé en ce que** ladite zone intermédiaire (12) forme une excroissance ou une cavité.

8. Essieu souple selon l'une quelconque des revendications 1 à 7, **caractérisé en ce que** ladite traverse (1) présente un profil en V, ladite zone intermédiaire (12) étant ménagée de façon sensiblement médiane par rapport à la section en V.

9. Traverse pour essieu souple de véhicule automobile, dont chaque extrémité présente au moins deux bords d'accostage(11) destinés à épouser transversalement une portion périphérique d'un bras longitudinal (2) dudit essieu et étant reliés au moins par une portion de liaison (14),
**caractérisé en ce que** les extrémités de ladite traverse (1) présentent, au voisinage de ladite portion de liaison (14) au moins trois zones (12), (13) possédant des rigidités différentes au moins en flexion, dont au moins une zone intermédiaire (12) présentant une première rigidité en flexion et au moins deux zones extrêmes (13) s'étendant entre ladite zone intermédiaire (12) et lesdits bords d'accostage (11), lesdites zones extrêmes (13) présentant chacune une deuxième rigidité en flexion supérieure à ladite première rigidité en flexion.

10. Procédé de fabrication d'une traverse (1) pour essieu souple, du type présentant au moins deux bords d'accostage (11) destinés à épouser transversalement une portion périphérique d'un bras longitudinal (2) dudit essieu et étant reliés au moins par une portion de liaison (14),
**caractérisé en ce qu'**il comprend une étape de réalisation, aux extrémités de ladite traverse (1) et au voisinage de ladite portion de liaison (14) d'au moins trois zones (12), (13) possédant des rigidités différentes au moins en flexion, dont au moins une zone intermédiaire (12) présentant une première rigidité en flexion et au moins deux zones extrêmes (13) s'étendant entre ladite zone intermédiaire (12) et lesdits bords d'accostage (11), lesdites zones extrêmes (13) présentant chacune une deuxième rigidité en flexion supérieure à ladite première rigidité en flexion.

11. Procédé de fabrication d'une traverse selon la revendication 10, **caractérisé en ce que** ladite zone intermédiaire (12) est réalisée par découpe d'une échancrure.

12. Procédé de fabrication d'une traverse selon la revendication 10, **caractérisé en ce qu'**il comprend une étape d'emboutissage de ladite traverse (1), ladite découpe d'une échancrure étant réalisée préalablement à ladite étape d'emboutissage.

13. Véhicule équipé d'au moins un essieu souple comprenant deux bras longitudinaux (2) reliés par une traverse (1) dont chaque extrémité présente au moins deux bords d'accostage (11) épousant transversalement une portion périphérique dudit bras (2) et étant reliés au moins par une portion de liaison (14),
**caractérisé en ce que** les extrémités de ladite traverse (1) présentent, au voisinage de ladite portion de liaison (14), au moins trois zones (12), (13) possédant des rigidités différentes au moins en flexion, dont au moins une zone intermédiaire (12) présentant une première rigidité en flexion et au moins deux zones extrêmes (13) s'étendant entre ladite zone intermédiaire (12) et lesdits bords d'accostage (11), lesdites zones extrêmes (13) présentant chacune une deuxième rigidité en flexion supérieure à ladite première rigidité en flexion.

## Claims

1. Flexible axle of a motor vehicle, comprising two longitudinal arms (2) connected by a cross-member (1), each end of which exhibits at least two coupling edges (11) conforming in shape transversely to a peripheral portion of said arm (2) and connected by at least one connecting portion (14),
**characterised in that** the ends of said cross-member (1) exhibit in the vicinity of said connecting portion (14) at least three zones (12), (13) having different rigidities at least in flexion, at least one intermediate zone (12) of which extending from said end of said cross-member and exhibiting a first flexural rigidity, and at least two outer zones (13) extending between said intermediate zone (12) and said coupling edges (11), said outer zones (13) each exhibiting a second flexural rigidity greater than said first flexural rigidity.

2. Flexible axle according to Claim 1, **characterised in that** said intermediate zone (12) forms a deformable zone.

3. Flexible axle according to one of Claims 1 and 2, **characterised in that** said intermediate zone (12) corresponds to at least one reduction of material in the wall of said cross-member.

4. Axle according to Claim 3, **characterised in that** said intermediate zone (12) forms an indentation extending between said end zones (13).

5. Flexible axle according to Claim 3, **characterised in that** said intermediate zone (12) exhibits a thinned wall in comparison with the wall of the cross-member (1) which surrounds it.

6. Flexible axle according to Claim 3, **characterised in that** said intermediate zone (12) includes orifices.

7. Flexible axle according to Claim 2, **characterised in that** said intermediate zone (12) forms a protuberance or a cavity.

8. Flexible axle according to any one of Claims 1 to 7, **characterised in that** said cross-member member (1) exhibits a V-shaped profile, said intermediate zone (12) being provided in substantially median manner in relation to the V-shaped section.

9. Cross-member for a flexible axle for a motor vehicle, each end of which exhibits at least two coupling edges (11) intended to conform in shape transversely to a peripheral portion of a longitudinal arm (2) of said axle and connected at least by a connecting portion (14),
**characterised in that** the ends of said cross-member (1) exhibit in the vicinity of said connecting portion (14) at least three zones (12), (13) having different rigidities at least in flexion, at least one intermediate zone (12) of which exhibiting a first flexural rigidity, and at least two outer zones (13) extending between said intermediate zone (12) and said coupling edges (11), said outer zones (13) each exhibiting a second flexural rigidity greater than said first flexural rigidity.

10. Method for manufacturing a cross-member (1) for a flexible axle, of the type exhibiting at least two coupling edges (11) intended to conform in shape transversely to a peripheral portion of a longitudinal arm (2) of said axle and connected at least by a connecting portion (14), **characterised in that** said method includes a step of creation, at the ends of said cross-member (1) and in the vicinity of said connecting portion (14), of at least three zones (12), (13) having different rigidities at least in flexion, at least one intermediate zone (12) of which exhibiting a first flexural rigidity, and at least two outer zones (13) extending between said intermediate zone (12) and said coupling edges (11), said outer zones (13) each exhibiting a second flexural rigidity greater than said first flexural rigidity.

11. Method for manufacturing a cross-member, according to Claim 10, **characterised in that** said intermediate zone (12) is created by cutting of an indentation.

12. Method for manufacturing a cross-member, according to Claim 10, **characterised in that** it includes a step of stamping said cross-member (1), said cutting of an indentation being implemented prior to said stamping step.

13. Vehicle equipped with at least one flexible axle comprising two longitudinal arms (2) connected by a cross-member (1), each end of which exhibits at least two coupling edges (11) conforming in shape transversely to a peripheral portion of said arm (2) and connected at least by a connecting portion (14),
**characterised in that** the ends of said cross-member (1) exhibit in the vicinity of said connecting portion (14) at least three zones (12), (13) having different rigidities at least in flexion, at least one intermediate zone (12) of which exhibiting a first flexural rigidity, and at least two outer zones (13) extending between said intermediate zone (12) and said coupling edges (11), said outer zones (13) each exhibiting a second flexural rigidity greater than said first flexural rigidity.

## Patentansprüche

1. Elastische Kraftfahrzeugachse, die zwei durch einen Querträger (1) verbundene Längsarme (2) aufweist, von dem jedes Ende mindestens zwei Andockränder (11) aufweist, die sich quer an einen peripheren Abschnitt des Arms (2) anschmiegen und mindestens durch einen Verbindungsabschnitt (14) verbunden sind,
**dadurch gekennzeichnet, dass** die Enden des Querträgers (1) in der Nähe des Verbindungsabschnitts (14) mindestens drei Zonen (12), (13) aufweisen, die unterschiedliche Steifigkeiten wenigstens bei Biegung besitzen, darunter mindestens eine Zwischenzone (12), die sich ausgehend von dem Ende des Querträgers erstreckt und eine erste Biegesteifigkeit aufweist, und mindestens zwei Endzonen (13), die sich zwischen der Zwischenzone (12) und den Andockrändern (11) erstrecken, wobei die Endzonen (13) jeweils eine zweite Biegesteifigkeit aufweisen, die größer ist als die erste Biegesteifigkeit.

2. Elastische Achse nach Anspruch 1, **dadurch gekennzeichnet, dass** die Zwischenzone (12) eine verformbare Zone bildet.

3. Elastische Achse nach einem der Ansprüche 1 und 2, **dadurch gekennzeichnet, dass** die Zwischenzone (12) mindestens einer Materialverringerung in der Wand des Querträgers entspricht.

4. Achse nach Anspruch 3, **dadurch gekennzeichnet, dass** die Zwischenzone (12) einen Ausschnitt bildet, der sich zwischen den Endzonen (13) erstreckt.

5. Elastische Achse nach Anspruch 3, **dadurch gekennzeichnet, dass** die Zwischenzone (12) eine Wand aufweist, die im Vergleich zu der sie umgebenden Wand des Querträgers (1), verdünnt ist.

6. Elastische Achse nach Anspruch 3, **dadurch gekennzeichnet, dass** die Zwischenzone (12) Öffnungen aufweist.

7. Elastische Achse nach Anspruch 2, **dadurch gekennzeichnet, dass** die Zwischenzone (12) einen Fortsatz oder einen Hohlraum bildet.

8. Elastische Achse nach einem der Ansprüche 1 bis 7, **dadurch gekennzeichnet, dass** der Querträger (1) ein V-Profil aufweist, wobei die Zwischenzone (12) im Wesentlichen in der Mitte in Bezug zu dem V-Abschnitt V eingerichtet ist.

9. Querträger für elastische Kraftfahrzeugachse, von dem jedes Ende mindestens zwei Andockränder (11) aufweist, die dazu bestimmt sind, sich quer an einen peripheren Abschnitt eines Längsarms (2) der Achse anzuschmiegen und durch mindestens einen Verbindungsabschnitt (14) verbunden sind,
**dadurch gekennzeichnet, dass** die Enden des Querträgers (1) in der Nähe des Verbindungsabschnitts (14) mindestens drei Zonen (12), (13) aufweisen, die unterschiedliche Steifigkeiten mindestens bei Biegung besitzen, von welchen mindestens eine Zwischenzone (12) eine erste Biegesteifigkeit aufweist, und sich mindestens zwei Endzonen (13) zwischen der Zwischenzone (12) und den Andockrändern (11) erstrecken, wobei die Endzonen (13) jeweils eine zweite Biegesteifigkeit aufweisen, die größer ist als die erste Biegesteifigkeit.

10. Herstellungsverfahren eines Querträgers (1) für elastische Achse des Typs, der mindestens zwei Andockränder (11) aufweist, die dazu bestimmt sind, sich quer an einen peripheren Abschnitt eines Längsarms (2) der Achse zu schmiegen und durch mindestens einen Verbindungsabschnitt (14) verbunden sind,
**dadurch gekennzeichnet, dass** es einen Schritt der Ausführung an den Enden des Querträgers (1) und in der Nähe des Verbindungsabschnitts (14) von mindestens drei Zonen (12), (13) umfasst, die unterschiedliche Steifigkeiten mindestens bei Biegung besitzen, von welchen mindestens eine Zwischenzone (12) eine erste Biegesteifigkeit aufweist, und sich mindestens zwei Endzonen (13) zwischen der Zwischenzone (12) und den Andockrändern (11) erstrecken, wobei die Endzonen (13) jeweils eine zweite Biegesteifigkeit aufweisen, die größer ist als die erste Biegesteifigkeit.

11. Verfahren zum Herstellen eines Querträgers nach Anspruch 10, **dadurch gekennzeichnet, dass** die Zwischenzone (12) durch Ausschneiden eines Ausschnitts hergestellt wird.

12. Verfahren zum Herstellen eines Querträgers nach Anspruch 10, **dadurch gekennzeichnet, dass** es einen Schritt des Stanzens des Querträgers (1) aufweist, wobei das Ausschneiden eines Ausschnitts vor dem Stanzschritt ausgeführt wird.

13. Fahrzeug, das mit mindestens einer elastischen Achse ausgerüstet ist, die zwei Längsarme (2) aufweist, die durch einen Querträger (2) verbunden sind, von dem jedes Ende mindestens zwei Andockränder (11) aufweist, die sich quer an einen peripheren Abschnitt des Arms (2) anschmiegen und mindestens durch einen Verbindungsabschnitt (14) verbunden sind,
**dadurch gekennzeichnet, dass** die Enden des Querträgers (1) in der Nähe des Verbindungsabschnitts (14) mindestens drei Zonen (12), (13) aufweisen, die unterschiedliche Steifigkeiten mindestens bei Biegung aufweisen, von welchen mindestens eine Zwischenzone (12) eine erste Biegesteifigkeit aufweist und sich mindestens zwei Endzonen (13) zwischen der Zwischenzone (12) und den Andockrändern (11) erstrecken, wobei die Endzonen (13) jeweils eine zweite Biegesteifigkeit aufweisen, die größer ist als die erste Biegesteifigkeit.
